# EUROPÄISCHE PATENTSCHRIFT

(11) **EP 0 768 116 B1**
(45) Veröffentlichungstag und Bekanntmachung des Hinweises auf die Patenterteilung: **12.12.2001**
(21) Anmeldenummer: 96115891.2
(22) Anmeldetag: 04.10.1996
(51) Int. Cl.: B01J 19/24, F28D 7/08, F28D 7/16, B01J 8/06

(54) **Rohrreaktor mit seriellen Rohren in einem Reaktormantel**
Variable reactor with serially connected tubes within a shell
Réacteur tubulaire modulable à tubes en série placés dans une calandre

(30) Priorität: 16.10.1995 DE 19539622
(43) Veröffentlichungstag der Anmeldung: 16.04.1997
(73) Patentinhaber: BAYER AG, 51368 Leverkusen (DE)
(72) Erfinder: Küpper, Kurt-Manfred, 51467 Bergisch Gladbach (DE); Perner, Ulrich, 51109 Köln (DE); Bergmann-Franke, Axel, 41540 Dormagen (DE); Groos, Horst, 51519 Odenthal (DE)

(56) Entgegenhaltungen:
- EP-A- 0 532 325
- FR-A- 1 547 405
- US-A- 3 898 049
- US-A- 4 102 652
- US-A- 4 363 355

## Beschreibung

Die vorliegende Erfindung betrifft einen an die Erfordernisse unterschiedlicher Reaktionen anpaßbaren und daher vielseitig einsetzbaren Rohrreaktor.

Für die Durchführung chemischer Reaktionen bieten Rohrreaktoren eine Reihe von Vorteilen gegenüber anderen Reaktortypen. Insbesondere zeichnen sie sich durch geringe Verweilzeitverteilung aufgrund vermeidbarer axialer Rückvermischung (Pfropfenströmung); gute Temperaturführung auch bei stark exothermen oder endothermen Reaktionen aufgrund des günstigen Verhältnisses von Reaktorvolumen zu Reaktoroberfläche und der im wesentlichen vollständigen Vermischung in radialer Richtung (Pfropfenströmung); der Eignung für die Durchführung von Reaktionen unter hohem Druck aufgrund der geringen, von der Reaktorwand aufzunehmenden Kräfte sowie durch eine weitgehende Wartungsfreiheit wegen des Fehlens von beweglichen Einbauten, wie Rührern, usw. aus.

Technische Rohreaktoren, die eine Länge im Bereich von etwa 100 bis 1000 m und mehr aufweisen können, werden nach dem Stand der Technik entweder in Form einer Rohrschlange, die sich in einem Kühlmedium befindet, ausgebildet mit dem Nachteil, daß eine Verweilzeit- und/oder Kapazitätsanpassung an veränderte Reaktionsbedingungen nicht möglich ist. Ferner kann die Temperierung nicht in Abhängigkeit vom Reaktionsfortschritt erfolgen, wenn die freiwerdende Wärme vom Reaktionsfortschritts abhängig ist, d.h. eine örtliche Abhängigkeit in axialer Richtung des Reaktors besteht. Ferner sind Rohrreaktoren bekannt, die aus einem Stapel von doppelwandigen Rohren von z.B. 10 bis 20 m Länge bestehen, wobei das Reaktionsmedium die inneren Rohre des Stapels nacheinander durchströmt und durch das Außenrohr das Kühl- bzw. Heizmedium geleitet wird. Dabei können die Mantelrohre der verschiedenen Rohrabschnitte unterschiedlich, entsprechend der gewünschten Temperierung in Abhängigkeit vom Reaktionsfortschritt, mit Kühlmedium beschickt werden. Solche Reaktoren sind konstruktiv sehr aufwendig und werden in der Regel für eine bestimmte Reaktion ausgelegt.

Aufgabe der vorliegenden Erfindung ist es, einen konstruktiv einfachen Rohrreaktor zur Verfügung zu stellen, der für die Durchführung unterschiedlichster Reaktionen eingesetzt werden kann. Aufgabe der vorliegenden Erfindung ist es auch, einen Rohrreaktor zur Verfügung zu stellen, bei dem die Reaktorlänge an die erforderliche Reaktionszeit und/oder die gewünschte Durchsatzkapazität vorwählbar angepaßt werden kann.

Eine weitere Aufgabe der Erfindung besteht darin, einen Rohrreaktor zu schaffen, der es erlaubt, die Reaktion stufenweise durchzuführen, indem über die Rohrlänge verteilt zusätzliche Reaktionskomponenten in den Reaktor eingeführt werden können.

Eine weitere Aufgabe der Erfindung besteht darin, einen Rohrreaktor zu schaffen, bei dem vorwählbar verfahrenstechnische Meßdaten in Abhängigkeit vom Reaktionsfortschritt gemessen werden können, wie Temperatur, Druck, Viskosität, optische Eigenschaften, bzw. auch die Entnahme von Proben aus dem Reaktionsmedium in Abhängigkeit vom Reaktionsfortschritt erfolgen kann.

Eine weitere Aufgabe der Erfindung besteht darin, einen Rohrreaktor zu schaffen, bei dem die Kühlleistung bzw. Heizleistung in Abhängigkeit von der Längsausdehnung des Reaktors gesteuert werden kann.

Eine weitere Aufgabe der Erfindung besteht darin, einen Rohrreaktor zu schaffen, der es erlaubt, das Reaktionsmedium an beliebiger Stelle auszuschleusen und wieder einzuschleusen, um zum Beispiel das kurzzeitig ausgeschleuste Reaktionsmedium während des Ausschleusungszeitraumes durch einen getrennten Wärmeaustauscher mit erhöhter Kühl- oder Heizleistung zu schicken, um kurzzeitig eine höhere oder niedrigere Reaktionstemperatur zu realisieren oder eine stärker exotherme oder endotherme Reaktionsstufe zu temperieren.

Eine weitere Aufgabe der vorliegenden Erfindung besteht darin, einen Rohrreaktor zu schaffen, der auf einfache Weise von Verunreinigungen bzw. Ablagerungen auf den Rohrwänden gereinigt werden kann.

Gegenstand der vorliegenden Erfindung ist ein Rohrreaktor, wie in Anspruch 1 dargestellt. Weitere Ausführungen der Erfindung sind in den abhängegen Ansprüchen 2 bis 5 aufgeführt.

Vorzugsweise sind die parallelen Reaktionsrohre derart angeordnet, daß sie auf den Rohrböden ein regelmäßiges, quadratisches oder insbesondere bevorzugt gleichschenklig-dreieckiges Raster bilden. Vorzugsweise sind jeweils mindestens Gruppen von vier Rohrenden mit lösbaren Flanschverbindungen versehen, wobei innerhalb einer Gruppe die Rohre paarweise über Rohrbögen verbunden sind.

Erfindungsgemäß kann die wirksame Länge des Rohrreaktors dadurch geändert werden, daß die Flanschverbindungen der Gruppe von Rohren gelöst wird, die Rohrbögen um 90° (bei quadratischem Raster) bzw. 60° (bei dreieckigem Raster) gedreht werden, wodurch ein Teil der parallelen Rohre im Rohrreaktor zugeschaltet bzw. von diesem abgetrennt werden. Auf diese Weise ist ein Rohrreaktor geschaffen, dessen Länge in Abhängigkeit von der durchzuführenden Reaktion verändert werden kann.

Der Durchmesser der parallelen Rohre des Rohrreaktors kann zwischen 3 und 50 mm liegen. Bevorzugt sind Rohrinnendurchmesser zwischen 10 und 30 mm. Die Länge der parallelen Rohre, entsprechend etwa dem Abstand der beiden Rohrbögen, kann etwa 1 bis 6 m betragen. Bevorzugt weist der erfindungsgemäße Rohrreaktor zwischen 100 und 500 parallele Rohre auf, so daß der erfindungsgemäße Rohrreaktor eine axiale Länge zwischen 100 bis 6000 m aufweist, wobei im Falle flüssiger Reaktionsmedien bei zur Erzeugung von Pfropfenströmung erforderlichen Strömungsgeschwindigkeiten von 1 bis 5 m pro Sekunde Verweilzeiten zwischen 20 Sekunden und 100 Minuten realisiert werden können.

Der erfindungsgemäß Rohrreaktor weist einen die Rohrböden verbindenden, zu den einzelnen Rohren parallelen Mantel auf, so daß die parallelen Rohre in einen zylindrischen Behälter eingeschlossen sind. Der zylindrische Behälter wird vorzugsweise mit einem flüssigen Kühl- bzw. Heizmittel beschickt, so daß der Rohrreaktor temperiert werden kann.

Vorzugsweise sind die Rohrböden in Segmente aufgeteilt, wobei die jeweils zu einem Segment gehörenden Reaktionsrohre derart mit Rohrbögen verbunden werden, daß diese nacheinander von dem Reaktionsmedium durchströmt werden. Bei bevorzugt kreisrundem Rohrboden wird vorzugsweise ein zentrales Segment gebildet, das einen Durchmesser aufweist, der 30 bis 50 %, besonders bevorzugt etwa einem Drittel, des Rohrbodendurchmessers entspricht. Außerhalb des zentralen Segmentes werden vorzugsweise 4 bis 8 periphere Segmente gebildet, die etwa gleichgroßen Sektoren des Rohrbodens entsprechen. Durch Umflanschen von jeweils zwei benachbarten Rohrbögen, von denen einer zum zentralen Segment gehört und der andere zu einem peripheren Segment, kann dann jeweils eine Anzahl von Reaktionsrohren dem Rohrreaktor zugeschaltet bzw. von diesem abgeschaltet werden, die der Anzahl von Reaktionsrohren in einem oder mehreren Segmenten entspricht.

Vorzugsweise erfolgt die Zufuhr des Heiz- bzw. Kühlmediums durch die zylindrische Außenwand des die Reaktionsrohre enthaltenden Behälters über mehrere Einlaßöffnungen, wobei jedem peripheren Segment eine oder mehrere Einlaßöffnungen zugeordnet sind. Der Abzug des Kühl- bzw. Heizmediums erfolgt vorzugsweise in der Achse der Rohrböden.

Nach einer weiter bevorzugten Ausführungsform werden zumindest einige der die Reaktionsrohre verbindenden Rohrbögen mit Meßeinrichtungen für die Überwachung von Prozeßparametern innerhalb des Rohrreaktors in Abhängigkeit vom Reaktionsfortschritt versehen. Dabei kann vorgesehen sein, daß die Reaktionstemperatur, der Reaktionsdruck, die Viskosität, optische Eigenschaften der Reaktionsmasse usw. innerhalb der Rohrbögen gemessen werden. Ferner können einzelne Rohrbögen mit Auslaßventilen zur Probennahme versehen sein. Ferner kann vorgesehen sein, daß einige der Rohrbögen Einlaßvorrichtungen für die Einspeisung zusätzlicher Reaktionspartner aufweisen, so daß der erfindungsgemäße Rohrreaktor zur Durchführung mehrstufiger Reaktionen geeignet ist.

Nach einer weiter bevorzugten Ausführungsform der vorliegenden Erfindung weisen die Einspeisevorrichtungen für das Kühl- bzw. Heizmedium individuelle Regeleinrichtungen für die Temperatur und/oder den Mengenstrom des Kühl- bzw. Heizmediums auf, so daß die zu unterschiedlichen Segmenten gehörenden parallelen Reaktionsrohre mit unterschiedlicher Kühl- bzw. Heizleistung beaufschlagt werden können.

Gegenstand der vorliegenden Erfindung ist, wie in Anspruch 1 beschrieben einen Rohrreaktor in Form eines zylindrischen Behälter, dessen beide Stirnflächen als Rohrböden ausgebildet sind, wobei der Behälter eine Vielzahl zur Zylinderachse parallele Reaktionsrohre aufweist, die durch die Rohrböden hindurchtreten und quer zu ihrer Achse ein regelmäßiges Raster bilden, wobei je zwei Rohrenden durch einen Rohrbogen miteinander verbunden sind, wobei mindestens ein Teil der Rohrbögen lösbar angeflanscht sind, der zylindrische Behälter in mehrere achsenparallele Segmente aufgeteilt ist, die Rohre eines jeden Segmentes derart durch Rohrbögen verbunden sind, daß in jedem Segment eine Rohrschlange gebildet wird, deren erstes und letztes Rohr zum ersten bzw. letzten Rohr der Rohrschlangen zweier benachbarter Segmente benachbart sind, wobei ferner über den Mantel des Behälters für jedes Segment mindestens ein Kühlmitteleinlaß vorgesehen ist, der eine Steuerung für die Temperatur und/oder den Mengenstrom des zugeführten Kühlmittels aufweist, wobei mindestens ein Rohrbogen eines jeden Segmentes eine Temperaturmeßeinrichtung aufweist und die Temperatur und/oder der Mengenstrom des diesem Segment zugeführten Kühlmittels in Abhängigkeit von der gemessenen Temperatur steuerbar ist. Der Abzug des Kühlmittels erfolgt vorzugsweise in der Achse des zylindrischen Behälters. Dabei wird vorzugsweise die Gesamtmenge des zugeführten Kühlmittels in Abhängigkeit von der Temperatur des Reaktionsmediums in einem achsennahen Rohrbogen gesteuert.

Zur Durchführung von Reaktionen mit im Laufe des Reaktionsverlaufes angenähert exponentiell abnehmender Wärmefreisetzung, wie dies regelmäßig bei einstufigen Reaktionen der Fall ist, kann erfindungsgemäß ein Rohrreaktor mit Gleichstromkühlung wie folgt realisiert werden: Es werden zunächst die im zylindrischen Behälter außengelegenen Reaktionsrohre durch Rohrbögen nacheinander miteinander verbunden, danach die zunächst außenliegenden usw., so daß sich eine um die Achse des zylindrischen Behälters aufgewickelte Rohrschlange ergibt. Das Kühlmedium wird durch eine Reihe auf dem zylindrischen Außenbehälter angeordneten Einlässen dem Behälter zugeführt und in der Behälterachse abgezogen. Durch individuelle Steuerung der Temperatur des Kühlmediums an dem jeweiligen Einlaß in Abhängigkeit von zugeordneten Temperaturmeßeinrichtungen in sektoral verteilten Rohrbögen sowie Steuerung der Gesamtmenge des zugeführten Kühlmediums in Abhängigkeit von der Temperatur in einem dem Auslaß benachbarten Rohrbogen wird eine vom Einlaß des Reaktionsmediums bis zum Auslaß sowohl über den Umfang als auch radial abnehmendes Temperaturgefälle eingestellt, mit einer der Wärmeentwicklung in dem jeweiligen Reaktionsrohr entsprechenden Temperaturdifferenz zum Reaktionsmedium.

Werden jeder Einlaßöffnung für das Reaktionsmedium mehrere radial verteilte Temperaturmeßeinrichtungen zugeordnet, deren Temperaturmeßwerte einer Mikroprozessorsteuerung für die Kühlmitteltemperatur und Kühlmittelmenge zugeordnet werden, so gelingt es, die Kühlleistung radial so zu steuern, daß in dem Rohrreaktor nur geringe Temperaturschwankungen von wenigen °C auftreten.

Aufgrund seiner kompakten Bauweise eignet sich der erfindungsgemäße Rohrreaktor auch für den Einsatz als Rohrreaktormodul, dem weitere Reaktormodule vor- oder nachgeschaltet werden können. Z.B. kann die Reaktionsmischung nach Austritt aus dem Rohrreaktor einem Dünnschichtverdampfer zugeführt werden, in dem evtl. eingesetztes Lösungsmittel verdampft wird. Es können auch mehrere erfindungsgemäße Rohrreaktoren parallel und hintereinander eingesetzt werden. Zum Beispiel kann es erforderlich sein, im Hinblick auf Viskositätsänderungen der Reaktionsmasse zur Aufrechterhaltung einer Pfropfenströmung die Reaktionsmasse nach einem gewissen Reaktionsfortschritt in einen Reaktor mit größerem bzw. kleinerem Durchmesser der Reaktionsrohre zu überführen. Für gewisse Reaktionen ist es zweckmäßig, zwei erfindungsgemäße identische Rohrreaktoren mit einem engeren Durchmesser der Reaktionsrohre bis zu einem gewissen Reaktionsfortschritt parallel zu betreiben und anschließend in einen dahintergeschalteten Rohrreaktor mit größerem Durchmesser der Reaktionsrohre zu überführen.

Ferner erlaubt es der erfindungsgemäße Rohrreaktor, einen Rohrbogen durch den Zu- und Ablauf zu einem weiteren Reaktor mit anderer Charakteristik zu ersetzen, um zwischenzeitlich stark veränderte Reaktionsbedingungen zu realisieren. Auch intermediäre Teilstrombehandlungen sind realisierbar, wenn ein Rohrbogen Rohrverzweigungen vorzugsweise mit regelbaren Ventilen aufweist.

Bei einem erfindungsgemäß bevorzugten Rohrreaktor sind alle die Reaktionsrohre verbindenden Rohrbögen durch lösbare Flansche mit den Reaktionsrohren verbunden. Dies erlaubt, die Reaktionsrohre nahezu in beliebiger Reihenfolge miteinander zu verbinden und so eine dem Verlauf der speziellen durchzuführenden Reaktion angepaßte Temperierung zu realisieren.

Der Innendurchmesser der Rohrbögen kann unabhängig vom Innendurchmesser der Reaktionsrohre gewählt werden, insbesondere kann der Innendurchmesser der Rohrbögen kleiner sein als der Innendurchmesser der Reaktionsrohre, so daß die Verweilzeit außerhalb des Kühlmittelbehälters gegebenenfalls aufgrund der bei kleinerem Durchmesser erhöhten Strömungsgeschwindigkeit verkürzt werden kann. Ferner dient eine in den Rohrbögen erhöhte Strömungsgeschwindigkeit auch der Verhinderung von Ablagerungen, die bevorzugt in den Rohrbögen auftreten.

Bei der Durchführung von Reaktionen in flüssigem Medium mit Viskositätsanstieg können ferner ein oder mehrere Rohrbögen durch eine Förderpumpe ersetzt werden, so daß das Druckniveau am Einlaß des Rohrreaktors niedriger gehalten werden kann.

Die Erfindung wird nachfolgend anhand der beigefügten Figuren 1 bis 3 näher erläutert:
- Figur 1: zeigt einen erfindungsgemäßen Rohrreaktor, bei dem sektoral benachbarte Reaktionsrohre nacheinander durchströmt werden.
- Figur 2: zeigt einen Schnitt A-A durch den in Aufsicht dargestellten Rohrreaktor der Figur 1.
- Figur 3: zeigt einen erfindungsgemäßen Rohrreaktor in Aufsicht, bei dem durch entsprechende Anordnung der Rohrbögen die einzelnen Reaktionsrohre derart verbunden sind, daß sich eine aufgewickelte Rohrschlange ergibt.

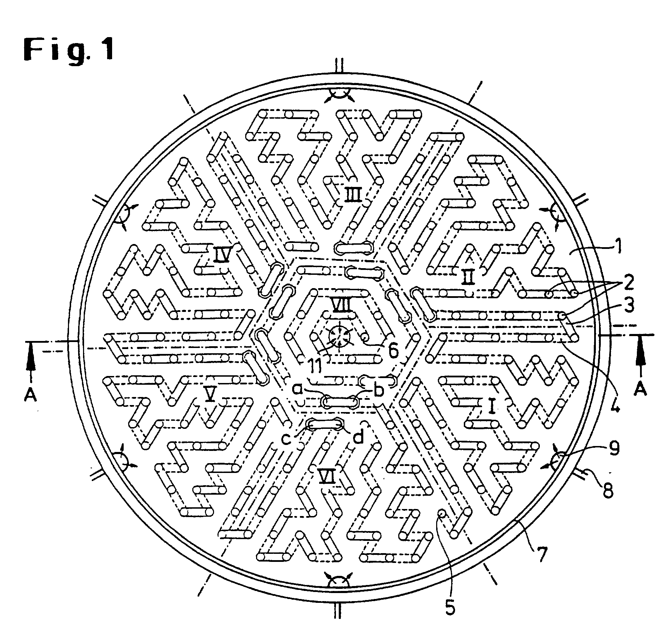

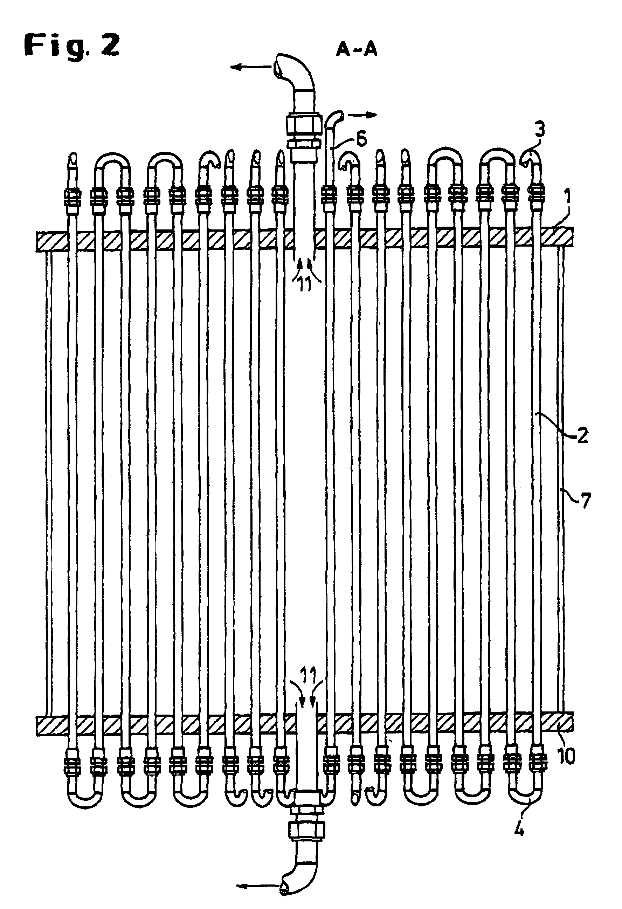

Wie aus Figur 1 und Figur 2 ersichtlich, werden die beiden Rohrböden 1 und 10 von einer Vielzahl von Reaktionsrohren 2 durchstoßen, die auf jedem Rohrboden ein regelmäßiges gleichschenklich-dreieckiges Raster bilden. Die Reaktionsrohre 2 sind durch Rohrbögen 3 und 4 verbunden. Wie aus Figur 1 ersichtlich, wird das Reaktionsmedium über ein Reaktionsrohr 5 in den Rohrreaktor eingeleitet und durchströmt nacheinander die durch strichpunktierte Linien angedeuteten peripheren Sektoren I bis VI und den zentralen Sektor VII bis zum Austritt des Reaktionsmediums aus dem zuletzt durchströmten Reaktionsrohr 6. Die beiden Rohrböden 1 und 10 bilden gemeinsam mit der zylindrischen Außenwand 7 einen Kühlmittelbehälter. Dem Kühlmittelbehälter werden über jedem Sektor I bis VI zugeordnete Kühlmittelzufuhrleitungen 8 individuell bezüglich Menge und Temperatur gesteuertes Kühlmittel zugeführt (9). Das Kühlmittel wird über zentral auf den Rohrböden angeordnete Abzugsrohre 11 abgezogen.

Zur Vereinfachung sind in Figur nur einzelne der Rohrbögen mit Flanschen dargestellt. Zur Verkürzung des Rohrreaktors können beispielsweise die die Reaktionsrohre a und b sowie c und d verbindenden Rohrbögen gelöst werden und danach ein Rohrbogen zur Verbindung der Reaktionsrohre a und c angeflanscht werden. Hierdurch werden die im Sektor VI verlaufenden Reaktionsrohre von dem Rohrreaktor abgeschaltet und so der ursprünglich aus insgesamt 312 Reaktionsrohren bestehende Rohrreaktor auf eine Länge von 272 Reaktionsrohren verkürzt.

Zur Verbesserung der sektoralen Versorgung mit Kühlmittel kann ferner vorgesehen sein, entlang der in Figur 1 dargestellten radialen strichpunktierten Linien Führungsbleche innerhalb des Reaktorbehälters vorzussehen, die eine Vermischung von benachbarten Sektoren zugeführtem Kühlmittel verhindern. Ferner können in dem zentralen Segment VII Leitbleche vorgesehen sein, die eine um den Kühlmittelabzug 11 rotierende Kühlmittelströmung begünstigen, so daß die aus verschiedenen peripheren Sektoren in den zentralen Sektor VII eintretenden Kühlmittelströme vermischt werden.

Zur Temperatursteuerung sind in jeweils einem oder mehreren, einem Sektor zugeordneten Rohrbogen Temperaturmeßfühler vorgesehen, in Abhängigkeit von deren Meßwerten die dem jeweiligen Sektor zugeführte Kühlmittelmenge und Temperatur, vorzugsweise nach Verarbeitung in einem Mikroprozessor, gesteuert wird.

Obwohl die Steuerung der Kühlleistung nicht unmittelbar auf ein einzelnes Reaktionsrohr wirkt, sondern jeweils die einem Sektor zugeordneten Reaktionsrohre gegebenenfalls unterschiedlich berücksichtigt, wurde gefunden, daß eine Temperatursteuerung mit nur geringen Fluktuationen realisierbar ist, da die Verweilzeit in jedem Reaktionsrohr lediglich in der Größenordnung einer Sekunde oder weniger liegt.

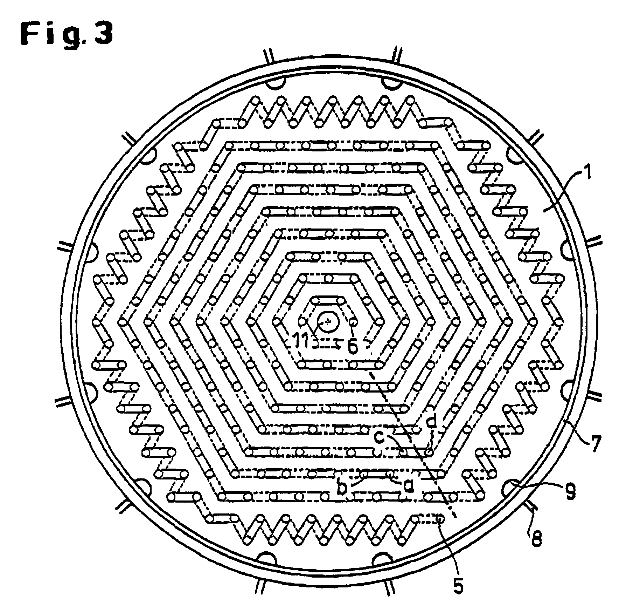

Figur 3 zeigt einen erfindungsgemäßen Rohrreaktor gemäß Figur 1, jedoch mit abweichender Anordnung der Rohrbögen, derart, daß die Projektion der Rohrbögen in eine Ebene senkrecht zur Achse die Form einer Spirale ergibt. Die Bezugszeichen in Figur 3 bezeichnen jeweils entsprechende Elemente wie in Figur 1.

## Patentansprüche

1. Rohrreaktor in Form eines zylindrischen Behälters, dessen beide Stirnflächen als Rohrböden ausgebildet sind, wobei der Behälter eine Vielzahl zur Zylinderachse parallele Reaktionsrohre aufweist, die durch die Rohrböden hindurchtreten und quer zu ihrer Achse ein regelmäßiges Raster bilden; wobei je zwei Rohrenden durch einen Rohrbogen miteinander verbunden sind; wobei mindestens ein Teil der Rohrbögen lösbar angeflanscht ist; der zylindrische Behälter in mehrere achsenparallele Segmente aufgeteilt ist; die Rohre eines jeden Segmentes derart durch Rohrbögen verbunden sind, dass in jedem Segment eine Rohrschlange gebildet wird, deren erstes und letztes Rohr zum ersten bzw. letzten Rohr der Rohrschlangen zweier benachbarter Segmente benachbart sind; wobei ferner über den Mantel des Behälters für jedes Segment mindestens ein Kühl- bzw. Heizmitteleinlass vorgesehen ist; wobei mindestens ein Rohrbogen eines jeden Segmentes eine Temperaturmesseinrichtung aufweist und die Temperatur und/oder der Mengenstrom des diesem Segment zugeführten Kühl- bzw. Heizmittels in Abhängigkeit von der gemessenen Temperatur steuerbar ist, und der Abzug des Kühl- bzw. Heizmittels in der Achse des zylindrischen Behälters erfolgt.

2. Rohrreaktor nach Anspruch 1, wobei mindestens einige der Rohrbögen Messsonden zur Ermittlung von Zustandswerten des Rohrinhaltes, wie Druck, Viskosität oder optische Eigenschaften, aufweisen.

3. Rohrreaktor nach Anspruch 1 oder 2, wobei mindestens einige der Rohrbögen Probenentnahmevorrichtungen aufweisen.

4. Rohrreaktor nach einem der Ansprüche 1 bis 3, wobei mindestens einer der Rohrbögen eine Einspeisevorrichtung für zusätzliche Reaktionspartner aufweist.

5. Rohrreaktor nach einem der Ansprüche 1 bis 4, wobei mindestens einer der Rohrbögen eine Fördereinrichtung für das Reaktionsmedium aufweist.

## Claims

1. A tubular reactor in the form of a cylindrical container, the two end faces of which have the form of tube plates, wherein the container comprises a plurality of reaction tubes parallel to the cylinder axis which pass through the tube plates and transversely to the axis of said tube plates form a regular grid, wherein in each case two tube ends are connected to one another by a tube bend, wherein at least a part of the tube bends is flange-attached in releasable fashion, the cylindrical container is divided into a plurality of axially parallel segments, the tubes of each segment are connected by tube bends in such manner that in each segment a tubular coil is formed, the first and last tube of which are adjacent to the first and last tube respectively of the tubular coils of two adjacent segments, wherein moreover for each segment at least one cooling- or heating medium inlet is provided over the casing of the container, wherein at least one tube bend of each segment possesses a temperature measuring device and the temperature and/or the flow of the cooling- or heating medium supplied to this segment is controllable as a function of the measured temperature and the discharge of the cooling- or heating medium takes place in the axis of the cylindrical container.

2. A tubular reactor according to Claim 1, wherein at least some of the tube bends comprise measuring probes for determining status values of the tube content, such as pressure, viscosity or optical properties.

3. A tubular reactor according to Claim 1 or 2, wherein at least some of the tube bends comprise sample extraction devices.

4. A tubular reactor according to one of Claims 1 to 3, wherein at least one of the tube bends comprises a feed-in device for additional reaction partners.

5. A tubular reactor according to one of Claims 1 to 4, wherein at least one of the tube bends comprises a conveying device for the reaction medium.

## Revendications

1. Réacteur tubulaire sous la forme d'un récipient cylindrique dont les deux faces frontales sont réalisées sous la forme de fonds de tube, ledit récipient comportant une pluralité de tubes de réaction parallèles à l'axe du cylindre, qui traversent les fonds de tube et forment perpendiculairement à son axe un réseau régulier ; deux extrémités de tube respectives sont reliées l'une à l'autre par un coude tubulaire ; au moins une partie des coudes tubulaires sont bridés de façon détachable ; le récipient cylindrique est subdivisé en plusieurs segments parallèles à l'axe ; les tubes de chacun des segments sont reliés par des coudes tubulaires de telle façon qu'il se forme un serpentin de tube dans chaque segment, dont le premier et le dernier tubes sont voisins du premier ou respectivement du dernier tube des serpentins tubulaires de deux segments voisins ; il est prévu au moins une entrée pour un fluide de refroidissement, ou respectivement pour un fluide de chauffage via l'enveloppe du récipient et pour chaque segment ; au moins un coude tubulaire de chaque segment comporté un dispositif de mesure de température, et la température et/ou le débit quantitatif du fluide de refroidissement ou de chauffage admis à ce segment est susceptible d'être commandé(e) en fonction de la température mesurée, et l'extraction du fluide de refroidissement ou de chauffage a lieu dans l'axe du récipient cylindrique.

2. Réacteur tubulaire selon la revendication 1, dans lequel quelques uns au moins des coudes tubulaires comportent des sondes de mesure pour déterminer des valeurs d'état du contenu des tubes, comme la pression, la viscosité, ou des propriétés optiques.

3. Réacteur tubulaire selon l'une ou l'autre des revendications 1 et 2, dans lequel quelques uns au moins des coudes tubulaires comportent des dispositifs de prélèvement d'échantillons.

4. Réacteur tubulaire selon l'une des revendications 1 à 3, dans lequel l'un au moins des coudes tubulaires comprend un dispositif d'alimentation pour des partenaires de réaction additionnels.

5. Réacteur tubulaire selon l'une des revendications 1 à 4, dans lequel l'un au moins des coudes tubulaires comprend un dispositif de convoyage pour le fluide de réaction.
